# EUROPEAN PATENT APPLICATION

(11) **EP 1 575 289 A2**
(43) Date of publication of application: **14.09.2005**
(21) Application number: 05250630.0
(22) Date of filing: 04.02.2005
(51) Int. Cl.: H04N 5/926

(54) **Audio/Video recording/reproducing system using an audio/video codec having a video decoder therin**

(30) Priority: 09.03.2004 KR 2004015729
(71) Applicant: SAMSUNG ELECTRONICS CO., LTD., Gyeonggi-do 442-742 (KR)
(72) Inventor: Kim, Min-gu, Suwon-si, Gyeonggi-do (KR)
(74) Representative: Brandon, Paul Laurence

(57) **Abstract**

An optical disc recording/reproducing system having a single chip for a video decoder and an A/V codec. The optical disc recording/reproducing system includes an audio/video input part (110) inputting audio and video signals in diverse formats, an audio/video codec (130) converting the video signal inputted from the audio/video input (110) part into a digital video signal, an audio ADC (121) converting the audio signal inputted from the audio/video input part into a digital audio signal, and a recording medium (161, 171, 180) recording the video and audio signals respectively encoded in a certain compression format.

## Description

The present invention relates to audio/video recording/reproducing systems.

Conventional optical disc recording/reproducing systems have a video decoder converting an input analog video signal into a digital signal before encoding the analog video signal into a moving picture experts group (MPEG) format. That is, the input analog video signal is converted into a digital video signal by the video decoder, compressed into the MPEG format, and recorded on a recording medium such as optical discs.

Conventional optical disc recording/reproducing systems have a dedicated video decoder processing an input analog video signal into a digital video signal, which causes problems, such as complexity, an increased number of components, cost increases, and so on, in implementing optical disc recording/reproducing systems.

In accordance with an aspect of the present invention, an audio/video recording/reproducing system having a single chip used for an audio decoder and an audio/video (A/V) codec is provided.

According to the present invention in a first aspect, there is provided an audio/video recording/reproducing system including an audio/video input part inputting audio and video signals in diverse formats, an audio/video codec converting the video signal inputted from the audio/video input part into a digital video signal, an audio ADC converting the audio signal inputted from the audio/video input part into a digital audio signal, and a recording medium recording the video and audio signals respectively encoded in a certain compression format, wherein the audio/video codec encodes the digital video signal and audio signal into compression formats respectively recording the video and audio signals on the recording medium, and outputs the digital video signal and audio signal in stream data.

Suitably, the recording medium is at least one of an optical disc, a memory card, a hard disc drive, or an external device connected to the system through certain interfacing.

Suitably, the audio/video codec further includes a video decoder converting a video signal input in at least one of the diverse formats into a digital video signal, and the audio/video codec and the video decoder are implemented into a single chip, and, preferably, the audio/video codec encodes the digital video signal according to the MPEG format.

According to the present invention in a second aspect, there is provided an information storage medium recording and/or reproducing apparatus, comprising: an integrated signal processor, the processor comprising: an audio and/or video codec which receives video data from a video input source and receives an audio signal from an audio input source, the codec encoding a digital video signal according to a first format and encoding the audio signal according to a second format and mixing the encoded digital video signal and the encoded audio signal into a multimedia stream, and a video decoder which converts the video data into the digital video signal; and a controller which controls the apparatus to record the multimedia stream on a surface of the information storage medium.

Further features of the present invention are set out in the appended claims.

The present invention will become apparent and more readily appreciated from the following description of the embodiments, by way of example only, taken in conjunction with the accompanying drawing of which:

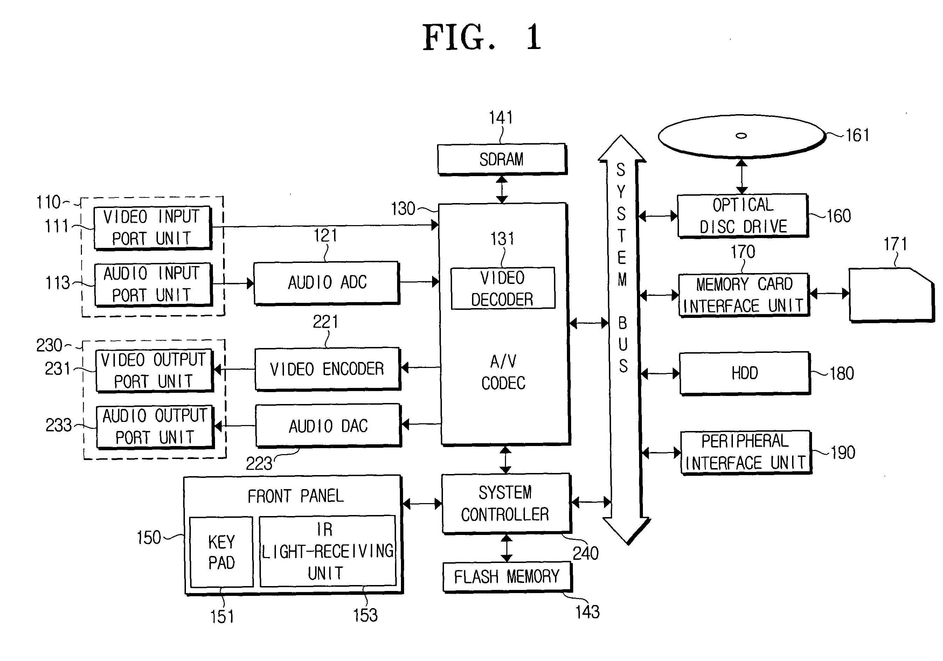

Figure 1 is a block diagram for schematically showing an optical disc recording/reproducing system according to an embodiment of the present invention.

Reference will now be made in detail to the embodiments of the present invention, examples of which are illustrated in the accompanying drawing, wherein like reference numerals refer to the like elements throughout. The embodiments are described below to explain the present invention by referring to the figure.

Figure 1 is a block diagram schematically showing an optical disc recording/reproducing system as an exemplary audio/video recording/reproducing system, according to an embodiment of the present invention.

As shown in Figure 1, the optical disc recording/reproducing system has an audio/video (A/V) input part 110, an audio analog-to-digital converter (ADC) 121, an A/V codec 130, a synchronous dynamic random access memory (SDRAM) 141, a flash memory 143, a front panel 150, an optical disc drive 160, a memory card interface unit 170, a hard disc drive (HDD) 180, a peripheral interface unit 190, a video encoder 221, an audio digital-to-analog converter (DAC) 223, an A/V output part 230, and a system controller 240.

The A/V input part 110 has a video input port unit 111 for inputting various kinds of video signals and an audio input port unit 113 for inputting an audio signal. For example, the video input port unit 111 has ports to separately receive the luminance signal Y and color signals Cr and Cb of a digital super video signal, a port to receive a mixed analog signal of the luminance signal Y and the color signal C, and a radio frequency (RF) unit to receive a sky-wave broadcast signal.

The audio ADC 121 converts an analog audio signal, which is input from an audio input port unit 113, into a digital signal for an output.

The A/V codec 130 is formed in a single chip in which the video decoder 131 is built, and converts into a digital video signal video signals of diverse formats input from the video input port unit 111. Further, the A/V codec 130 encodes and decodes an audio signal and a video signal according to a predetermined compression format. That is, the A/V codec 130 encodes according to a predetermined compression format a video signal and an audio signal processed by the video decoder 131 and the audio ADC 121, respectively, and mixes the encoded video and audio signals into stream data for an output.

The stream data read out of the optical disc 161 is separated into an audio signal and a video signal, and the separated audio and video signals are decoded according to respective compression formats for an output. For example, a video signal is encoded according to the moving picture experts group (MPEG)-2 (video) standard referred to as ISO/IEC 13818-3, an audio signal is encoded in the Dolby AC-3 digital standard, and the respective encoded video and audio signals are output as stream data. The A/V decoding approach performs decoding corresponding to the encoding approach. It is understood that the encoding approach is not restrained to the MPEG-2 standard, but can be extended to the MPEG-1 or MPEG-4 standards.

The SDRAM 141 is used as a temporary storage space when encoding and decoding in the A/V codec 130.

The flash memory 143 stores an Operating System and various application programs for operating the system.

A user interfaces with the front panel 150 to input commands that set or select functions supported by the system. The front panel 150 has a key pad 151 provided with various operation buttons and/or an infrared (IR) light-receiving unit 153 which receives commands transmitted from a remote controller (not shown).

The optical disc drive 160 records on the optical disc 161, through an optical pickup device (not shown), the stream data compressed in a predetermined compression format by the A/V codec 130. Further, data recorded on the optical disc 161 is reproduced through the optical pickup device (not shown). The optical disc may be a CD-R, CD-ROM, DVD, Blu-ray, Advanced Optical Disc (AOD), etc.

The memory card interface unit 170 receives and transmits data between the system controller 240 and the built-in memory card 171, and the memory card 171 stores data of diverse formats. For example, the memory card 171 can store data such as still picture files like joint photographic expert group (JPEG) files, moving picture files and music files like MP3 files, various programs used to operate the system.

The HDD 180 is a storage medium, which is similar to the optical disc 161 or the memory card 171, supported by the system according to an embodiment of the present invention, and storing the still picture files, moving picture files, and music files.

The peripheral interface unit 190 supports universal serial bus (USB) and IEEE1394 interfacing, by which data in digital video stream is received from and transmitted to peripherals using the USB or the IEEE 1394 interfacing to enhance the stream data transmission rate.

The video encoder 221 converts a digital video signal, decoded in a certain compression format by the A/V codec 130, into an analog video signal. The video encoder 221 converts the decoded digital video signal into an analog signal in the A/V codec 130 according to a certain compression format, the video signal having been read out of the optical disc 161 or a recording medium that the system can support.

The audio DAC 223 converts into an analog audio signal a digital audio signal decoded in a certain compression format by the A/V codec 130. The audio DAC 223 converts a decoded audio signal into an analog signal in the A/V codec 130 according to a certain compression format, the audio signal having been read out of the optical disc 161 or a different recording medium that the system can support.

The A/V output part 230 has a video output port unit 231 to output a video signal in diverse formats and an audio output port unit 233 to output an audio signal. For example, the video output port unit 231 has ports to separately output the luminance signal Y and color signals Cr and Cb of a digital super video signal, a port for outputting a mixed analog signal of the luminance signal Y and the color signal C. It is understood that it is not necessary to output all of the signals from the video output port unit 231, and that any combination of these signals may also be output.

The system controller 240 controls the overall operations of the system according to system operation and setting commands input from the front panel 150.

Hereinafter, with reference to Figure 1, description will be made of a process for the A/V codec 130 having a video decoder to encode a signal into a certain compression format and record the encoded signal on the optical disc 161. It is understood that the recording medium may be at least one of the optical disc, a memory card, a hard disc drive or an external device connected through an interface that the system can support according to embodiments of the present invention.

When a user intends to record on the optical disc 161 a certain broadcast program being received through an RF unit (not shown), the user inputs a record operation command through the key pad 151 or a remote controller (not shown). With the command input, the system controller 240 controls the overall operations of the system to perform recording operations.

According to the controls of the system controller 240, a video signal of a broadcast signal being received through the RF unit (not shown) provided in the video input port unit 111 is input to the A/V codec 130. The video decoder 131 provided in the A/V codec 130 converts the received analog video signal into a digital video signal.

An audio signal of the analog broadcast signal being received through the RF unit (not shown) is converted into a digital audio signal by the audio ADC 121, and then input into the A/V codec 130.

The broadcast signal converted into digital signals, that is, the audio signal and the video signal described above, are respectively encoded in the A/V codec 130 according to a certain compression format. For example, the video signal is encoded according to the MPEG-2 (video) standard referred to as ISO/IEC 13818-3, and the audio signal is encoded according to the Dolby AC-3 digital standard, and the encoded video signal and audio signal are output in stream data.

The system controller 240 records the MPEG-2 stream data output from the A/V codec 130 on the optical disc 161 or other recording medium that the system can support.

As described above, system hardware implementation and cost can be respectively simplified and reduced by a single chip designed to have a video decoder for digital signal processing to convert an analog video signal input from the A/V input part 110 into a digital signal and an MPEG codec compressing the video signal into a certain format.

According to an embodiment of the present invention, an audio/video recording/reproducing system having a single chip for the video decoder and the A/V codec is provided, thereby simplifying the system implementation and reduce the implementation cost.

Embodiments of the present invention can be realized as a computer-readable code written on a computer-readable recording medium. The computer-readable recording medium includes nearly all kinds of recording devices, in which data can be stored in a computer-readable manner. For example, the computer-readable recording medium includes ROM, RAM, CD-ROM, a magnetic tape, a floppy disk, an optical data storage, or a carrier wave (e.g., data transmission through the Internet). In addition, the computer-readable recording medium can be distributed over a plurality of computer systems connected to one another in a network so that data written thereon can be read by a computer in a decentralized manner. Functional programs, codes, and code segments necessary for realizing the present invention can be easily inferred from the prior art by one of ordinary skill in the art that the present invention pertains to.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An audio/video recording/reproducing system, comprising:
an audio/video input part (110) inputting audio and video signals in a plurality of formats;
an audio/video codec (130) converting the video signal input from the audio/video input part (110) into a digital video signal;
an audio analog-to-digital converter (121) converting the audio signal input (110) from the audio/video input part into a digital audio signal; and
a recording medium (161, 171, 180) for recording the digital video signal and digital audio signal respectively encoded in first and second formats,
wherein the audio/video codec (130) encodes the digital video signal and digital audio signal into the first and second formats respectively and outputs the encoded digital video signal and audio signal as stream data that is recorded on the recording medium (161, 171, 180) .

2. The audio/video recording/reproducing system as claimed in claim 1, wherein the recording medium (161, 171, 180) is at least one of an optical disc (161), a memory card (171), a hard disc drive (180), or an external device connected to the system through certain interfacing.

3. The audio/video recording/reproducing system as claimed in claim 1 or claim 2, wherein the audio/video codec (130) encodes the converted digital video signal according to a moving picture experts group (MPEG) format.

4. The audio/video recording/reproducing system as claimed in any preceding claim, wherein the audio/video codec (130) further comprises a video decoder (131) for converting a video signal input in the plurality of formats into the digital video signal, and the audio/video codec (130) and the video decoder (131) are implemented into a single chip.

5. An information storage medium recording and/or reproducing apparatus, comprising:
an integrated signal processor, the processor comprising:
an audio and/or video codec (130) which receives video data from a video input source (111) and receives an audio signal from an audio input source (113), the codec (130) encoding a digital video signal according to a first format and encoding the audio signal according to a second format and mixing the encoded digital video signal and the encoded audio signal into a multimedia stream, and
a video decoder (131) which converts the video data into the digital video signal; and
a controller (240) which controls the apparatus to record the multimedia stream on a surface of the information storage medium (161, 171, 180).

6. The apparatus as claimed in claim 5, further comprising:
an audio analog-to-digital converter (121) which converts data received from the audio input source (113) into the audio signal for the audio and/or video codec (130).

7. The apparatus as claimed in claim 5 or claim 6, wherein the codec (130) encodes the video signal according to an MPEG format.

8. The apparatus as claimed in any one of claims 5-7, wherein the codec encodes the audio data according to a Dolby AC-3 format.

9. The apparatus as claimed in any one of claims 5-8, wherein the information storage medium (161, 171, 180) is an optical disc (161).

10. The apparatus as claimed in any one of claims 5-8, wherein the information storage medium (161, 171, 180) is at least one of a memory (171), a hard disk drive (180) or an external peripheral device, the information storage medium interfacing with the processor via a bus.

11. The apparatus as claimed in any one of claims 5-10, further comprising:
a user interface (151) which receives user input commands controlling the recording of the data.
